# EUROPEAN PATENT APPLICATION

(11) **EP 2 933 192 A1**
(43) Date of publication of application: **21.10.2015**
(21) Application number: 15162625.6
(22) Date of filing: 07.04.2015
(51) Int. Cl.: B64F 1/32

(54) **A LOADING PLATFORM FOR A SERVICE VEHICLE**

(30) Priority: 08.04.2014 GB 201406344; 21.07.2014 GB 201412871
(71) Applicant: Mallaghan Engineering Limited, Dungannon County Tyrone BT71 6LA (GB)
(72) Inventor: Fegan, James, Dungannon, County Tyrone BT71 6LA (GB)
(74) Representative: Waller, Stephen

(57) **Abstract**

A loading platform (12) for a service vehicle for servicing an aircraft, said loading platform comprising a cantilevered platform arranged to define a bridge between a container body of the service vehicle and a service opening of an aircraft, a pair of side barriers (22,24) being provided on either side of said cantilevered platform, and a safety barrier (54) being provided to extend transversely between the side barriers adjacent an outer end of said cantilevered platform when in an operative configuration, said safety barrier being mounted at an outer end of a pair of mounting arms (56,58), each mounting arm being pivotally mounted on a respective side barrier such that the safety barrier can be swung between said operative configuration, wherein the safety barrier extends transversely between said side barriers to restrain an operator from moving beyond an outer end of said cantilevered platform, and a raised configuration, wherein said safety barrier is positioned above said cantilevered platform such that said operator may pass beneath the safety barrier.

## Description

### Field of the Invention

This invention relates to a loading platform for a service vehicle for servicing an aircraft and to a service vehicle having an improved aircraft loading platform.

### Background of the Invention

It is well known to provide service vehicles at airports to facilitate servicing of the interior of the aircraft, for example, cleaning the interior and seating of the aircraft, and more particularly for replenishing supplies of food and drink and other provisions for passengers. Such service vehicles are typically equipped with a container or truck body mounted on a lifting arrangement on the chassis of the vehicle, behind the operator's cab, whereby the container can be raised to the height of the fuselage of an aircraft, typically by a scissor lift arrangement activated by one or more hydraulic rams.

A cantilevered loading platform is usually provided at one end, typically a forward end, of the container for docking with a door of an aircraft to define a bridge between the container and the aircraft, allowing persons, equipment and supplies to be transferred between the container and an aircraft. The loading platform typically comprises a telescopically extendable outer section, such that the front edge of the outer section of the loading platform can be extended to abut the fuselage of an aircraft, just below a service entrance thereof. Safety railings are typically provided on either side of the front loading platform and resilient bumpers are mounted on a leading edges of the platform and the safety railings for abutting the aircraft fuselage without damaging the aircraft. The safety railings are typically incorporate extendable outer sections, which can be extended into abutment with the fuselage of the aircraft on either side of the telescopically extendable outer section of the platform.

In use, the service vehicle can be driven up to an aircraft and, once in position, the container body can be raised to the required height (i.e. level with the service entrance of the aircraft). Ground engaging stabilisers may be provided on the vehicle which may be extended to engage the ground and stabilise the vehicle before raising the container body.

Once the loading platform has been positioned adjacent a service opening of an aircraft, typically an operator walks over the platform and knocks on the door of the aircraft to prompt the cabin crew to open the door from inside the aircraft.

As aircraft doors typically open outwardly, it is generally not possible to fully extend the outer section of the platform and/or the outer sections of the safety railings until the aircraft door has been opened. This means that the operator is exposed to a great risk of falling from the platform until the aircraft door has been opened and the outer section of the platform and the safely railings have been extended such that the platform is safely docked against the open service opening of the aircraft.

It is an object of the present invention to provide an improved aircraft loading platform for a service vehicle which mitigates this risk.

### Summary of the Invention

According to a first aspect of the present invention there is provided a loading platform for a service vehicle for servicing an aircraft, said loading platform comprising a cantilevered platform arranged to define a bridge between a container body of the service vehicle and a service opening of an aircraft, a pair of side barriers being provided on either side of said cantilevered platform, and a safety barrier being provided to extend transversely between the side barriers adjacent an outer end of said cantilevered platform when in an operative configuration, said safety barrier being mounted at an outer end of a pair of mounting arms, each mounting arm being pivotally mounted on a respective side barrier such that the safety barrier can be swung between said operative configuration, wherein the safety barrier extends transversely between said side barriers to restrain an operator from moving beyond an outer end of said cantilevered platform, and a raised configuration, wherein said safety barrier is positioned above said cantilevered platform such that said operator may pass beneath the safety barrier. Preferably locking means are provided for locking the safety barrier in its operative configuration. In a preferred embodiment the locking means is operatively connected to control means, said control means preventing release of said locking means unless said control means determines that the operating conditions of the loading platform are appropriate to permit release of the locking means and movement of the safety barrier to its raised configuration. The control means may include sensing means comprises one or more proximity sensors for detecting the proximity of the loading platform to an aircraft, said control means allowing release of said locking means when the sensing means indicates that the loading platform is in an appropriate position with respect to an aircraft to permit movement of the safety barrier to its raised configuration.

In one embodiment the side barriers may each comprise a first section, mounted on said cantilevered platform adjacent an inner end thereof, and a second section, slidably mounted with respect to the respective first section to be moveable between a retracted position, and an extended position, wherein the mounting arms of said safety barrier are pivotally mounted on respective second sections of the side barriers such that the safety barrier moves with the second sections of the side barriers between their retracted and extended positions. Each side barrier may include a further section telescopically extendable from the respective second section thereof. Resilient bumpers may be provided on a leading edge of the further section of each side barrier for abutting the fuselage of an aircraft.

The cantilevered platform may comprise a first portion mounted on said container body of the vehicle and a further section telescopically extendable from said first section. Preferably the side barriers are mounted on said first portion of the platform. A resilient bumper may be provided on a leading edge of said further section of the platform for abutting the fuselage of an aircraft when the further section is extended with respect to the first section.

The mounting arms may be arranged to extend substantially horizontally when the safety barrier is in its operative configuration and to extend substantially vertically when the safety barrier is in its raised configuration.

In one embodiment biasing or lifting means may be provided for biasing said safety barrier towards its raised configuration. The biasing means comprise one or more gas struts or springs acting between one or both of the mounting arms of the safety barrier and one or both of the side barriers.

One or more actuators, such a hydraulic or pneumatic ram, may be provided for moving said safety barrier between its operative and raised configurations.

According to a further aspect of the present invention there is provided an aircraft service vehicle comprising a wheeled chassis having an operators cab at a forward end thereof, a container body being mounted on the chassis behind the operators cab via a lifting means enabling the container body to be elevated with respect to the chassis to allow the container body to be aligned with a service entrance of an aircraft, a loading platform in accordance with the first aspect of the invention being provided at a forward and or a rear end of the container body, whereby persons, equipment and supplies can be transferred between the body and the service entrance of the aircraft.

### Brief Description of the Drawings

Examples of loading platform of a service vehicle in accordance with embodiments of the present invention will now be described, by way of example only, with reference to the accompanying drawings, in which :-
Figure 1 is a perspective view of a loading platform in accordance with a first embodiment of the present invention in a retracted or transport configuration;
Figure 2 is a perspective view of the aircraft loading platform of Figure 1 in an extended configuration;
Figure 3 is a perspective view of the aircraft loading platform of Figure 1 in an operative configuration;
Figure 4 is a perspective view of a loading platform in accordance with a second embodiment of the present invention in a retracted or transport configuration;
Figure 5 is a perspective view of the aircraft loading platform of Figure 4 in an operative configuration;
Figure 6 is longitudinal sectional view of the aircraft loading platform of Figure 4 in its retracted or transport configuration, with the covering of the inner panel of the side barrier omitted for clarity;
Figure 7 is a longitudinal sectional view of the aircraft loading platform of Figure 4 is its operative configuration with the covering of the outer panel omitted; and
Figures 8 and 9 are perspective view of the aircraft loading platform of Figure 4 in use.

### Detailed Description of the Drawings

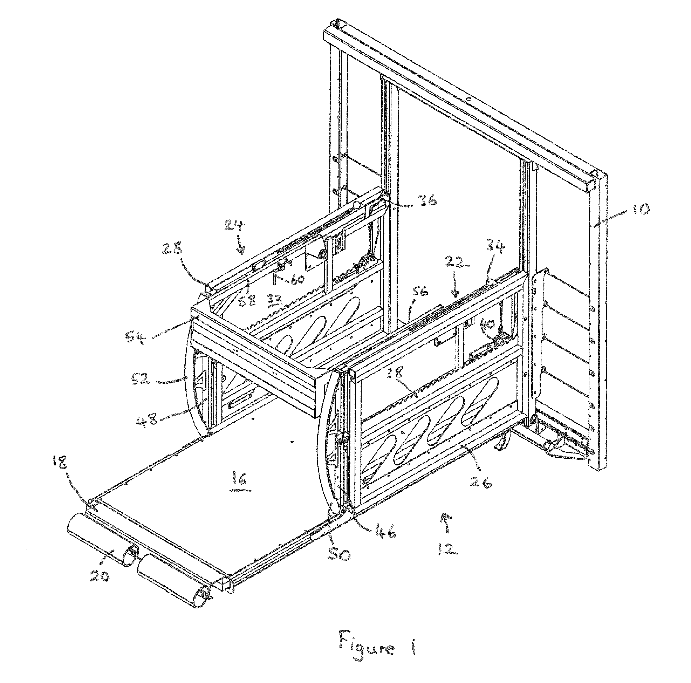

An aircraft loading platform in accordance with a first embodiment of the present invention, as illustrated in Figures 1 to 3, is intended to be used with a service vehicle comprising a chassis supported on front and rear pairs of road wheels, an operators cab being mounted upon a front end of the chassis from which the vehicle may be driven. A container body 10 is mounted on the chassis behind the cab, within which may be carried catering supplies, cleaning equipment and other items and provisions required for servicing aircraft. As is known in the art, the container body 10 may be mounted on the chassis via a scissor lift, or other suitable lifting means, whereby the container body 10 may be vertically elevated to the height of an aircraft fuselage by means of a suitable drive means, such as one or more hydraulic rams.

As shown in Figures 1 to 3, a horizontally extending loading platform 12 is provided on one end of the container body 10 (typically a forward end thereof) to define a bridge between the container body 10 and a service opening of an aircraft for loading persons, equipment, provisions and catering and/or cleaning supplies onto the aircraft.

The loading platform comprises a first platform section 16 within which is telescopically mounted an outer platform section 18, whereby the outer platform section 18 can be extended from the first platform section 16 to bridge a gap between the first platform section 16 and the fuselage of an aircraft.

A resilient bumper 20 may be mounted on a leading edge of the outer platform section 18 for abutting the aircraft fuselage. The resilient bumper 20 may be provided with sensing means for sensing contact between the bumper 20 and the fuselage of the aircraft.

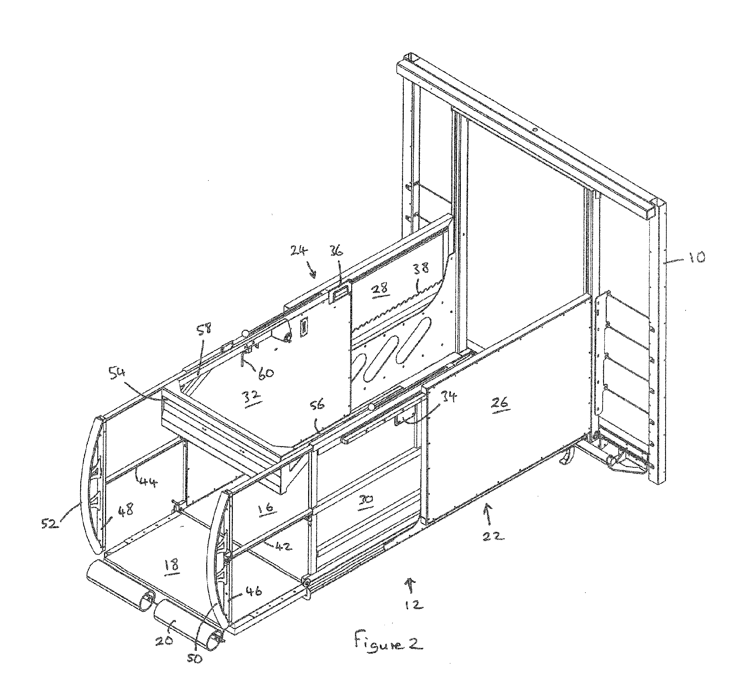

Side barriers 22,24 are provided on opposite sides of the platform. As shown in the drawings, the side barriers 22,24 may include fixed first panels 26,28 mounted either side of the first platform section 16 adjacent an inner end thereof and extendable second panels 30,32, slidably moveable with respect to the first panels 26,28 between retracted positions, wherein a leading edge of each second panel 30,32 is spaced inwardly from an outer edge of the first platform section 16, and extended positions, wherein the leading edge of each second panel 30,32 is substantially level with the outer edge of the first platform section, as shown in Figures 1 and 2.

A respective operating handle 34,36 may be provided on an inner end of the second panel 30,32 of each side barrier 22,24 for retracting and extending the second panels 30,32 with respect to the first panels 26,28 of the side barriers 22,24.

In Figure 1, the outer side of the first panel 26 of the side barrier 22 closest to the viewer has been omitted to show the locking mechanism for controlling extension of the second panels of the side barriers with respect to the first panels, each locking mechanism comprising a toothed rack 38 mounted on the first panel of the respective side barrier and a spring loaded pawl 40 mounted on the second panel of the respective side barrier, the operating handles 34,36 being adapted to lift the respective pawl 40 out of engagement with the respective rack 38 when it is desired to extend the second panel of the respective side barrier with respect to the first panel. The teeth of the each rack 38 may be shaped to allow the respective pawl 40 to slide over the teeth of the respective rack 38 when a force is applied to the respective second panel 30,32 acting to urge the respective second panel 30,32 towards its retracted position with respect to the respective first panel 26,28 to prevent damage to an aircraft.

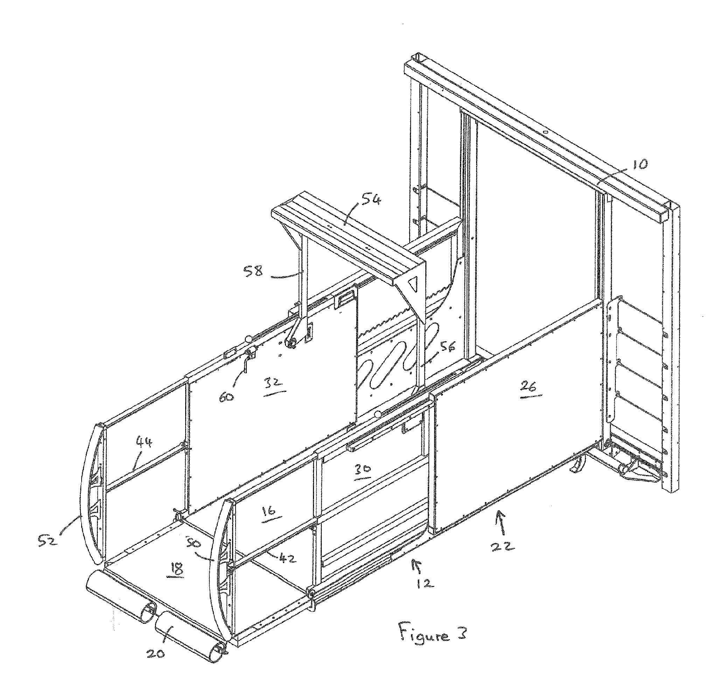

Outer side rails 42,44 are preferably telescopically extendable from the second panel 30,32 of each side barrier 22,24, said outer side rails 42,44 being extendable from the second panels 30,32 of the side barriers 22,24 to lie on either side of the outer platform section 18 when the outer platform section 18 is in its extended position, as shown in Figures 2 and 3. Curved outer upright members 46,48 may be located at the outer end of each of the outer side rails 42,44, resilient bumpers 50,52 being provided on an outer edge of each upright member 46,48.

A safety barrier 54 is provided at an outer end of parallel mounting arms 56,58 to extend transverse to the loading platform 12, the safety barrier 54 being moveable between an operative position, shown in Figures 1 and 2, wherein the safety barrier 54 extends between the side barriers 22,24 to prevent an operator from moving beyond a leading edge of the first platform section 16.

Each safety barrier mounting arm 56,58 may be pivotally mounted at an inner end to a respective inner side of the second panel 30,32 of a respective side barrier 22,24 such that the mounting arms 56,58 can be pivoted through 90° between a horizontally extending lowered position, wherein the safety barrier 54 is in a lowered position, extending between the side barriers 22,24, shown in Figures 1 and 2, and a vertical raised position, wherein the safety barrier is in a raised position above the first platform section 16, as shown in Figure 3, such that persons may pass under the safety barrier 54.

Locking pins 60 may be provided for locking the mounting arms 56,58, and thus the safety barrier 54, in their lowered positions.

In a preferred embodiment, an electronic interlock system is provided, wherein release of the locking pins 60 is prevented until sensors provided on the loading platform, for example on an outer side of the first platform section 16 and/or the outer platform section 18, detect that the loading platform is correctly positioned adjacent the fuselage of an aircraft.

A hydraulic or pneumatic ram (not shown) may be provided for moving the mounting arms 56,58 of the safety barrier 54 between their lowered and raised positions. Alternatively, one or more gas struts may be provided to assist lifting of the safety barrier 54 and to retain the safety barrier 54 in its raised position.

In use, the service vehicle can be driven up to an aircraft and, once in position, the container body 10 can be raised to the required height (i.e. level with the service entrance of the aircraft). An operator may then move onto the first platform section 16 and extend the second panels 30,32 of the side barriers 22,24 to their extended positions, using the operating handles 34,36 to release the pawls 40 from the racks 38 of the locking mechanism of the second panels. During such operation, the safety barrier 54 remains in its lowered position, preventing the operator from falling off the end of the platform.

The operator can then knock on the aircraft cabin door, as usual, to prompt the cabin crew to open the door. Once the door is open, the operator can extend the outer platform section 18 and the outer side rails 42,44 to engage the side of the aircraft. Finally, the operator can release the locking pins 60 and swing the safety barrier 54 upwardly to its raised position, as shown in Figure 3.

The safety barrier 54 remains it is lowered position until the loading platform 12 is fully docked with the aircraft, providing a safe working environment for the operator of the loading platform and thus mitigating the safety problems inherent in the prior art systems.

The loading platform 12 may be pivotally mounted on the container body 10 to enable it to be folded to a raised transportation position when not in use.

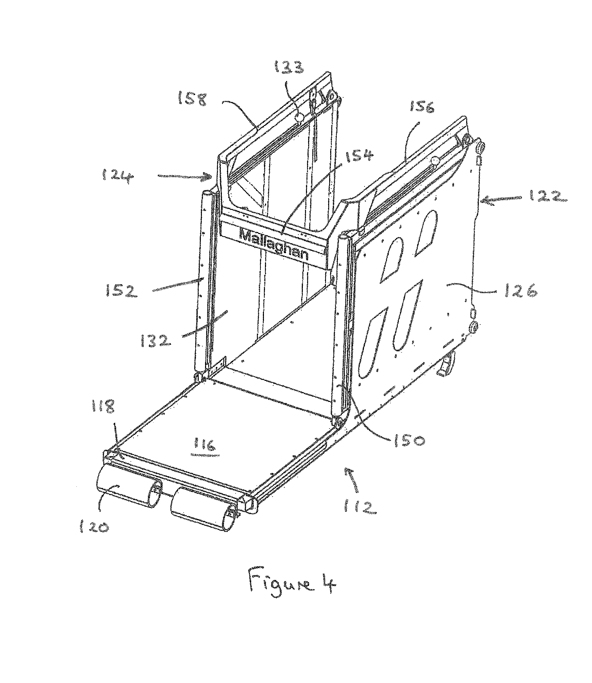

An aircraft loading platform 112 in accordance with a second embodiment of the present invention, as illustrated in Figures 4 to 9, is intended to be used with a service vehicle of the half cab type, wherein the loading platform 112 is intended to be located to one side of the cab at a forward end of the container body. Such half cab service vehicles are used for smaller aircraft due to the ability to operate the loading platform at a lower height compared to the full cab type vehicles, where the loading platform must be located above the cab.

In such cases, the width of the loading platform 112 must be minimised, while optimising the space between the side barriers 122,124 of the loading platform 112.

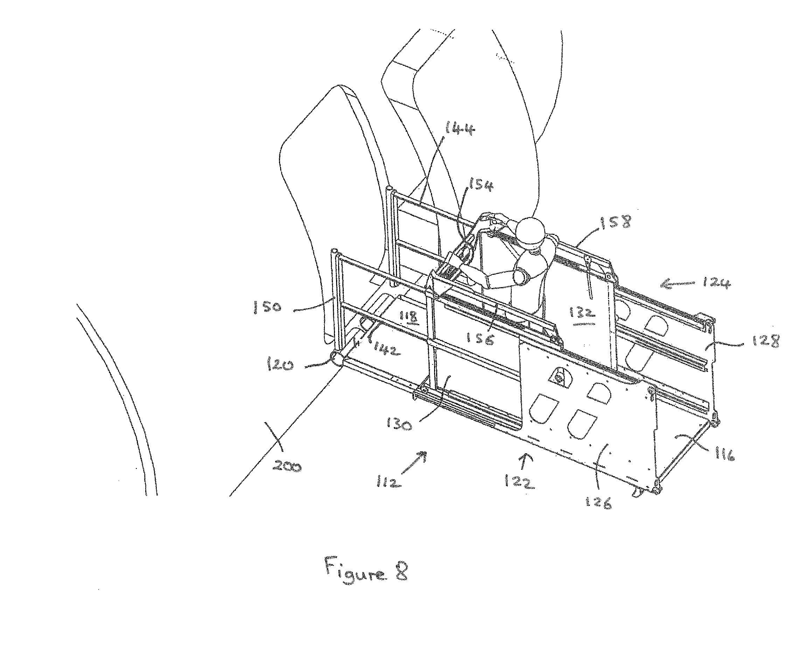

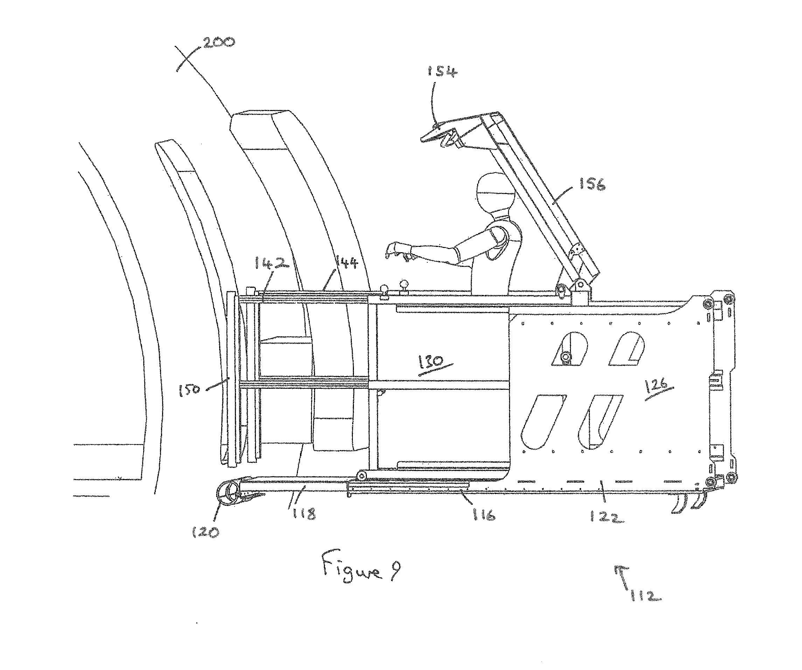

The loading platform 112 comprises a first platform section 116 within which is telescopically mounted an outer platform section 118, whereby the outer platform section 118 can be extended from the first platform section 116 to bridge a gap between the first platform section 116 and the fuselage of an aircraft 200 (see Figures 8 and 9).

As with the first embodiment, resilient bumpers 120 may be mounted on a leading edge of the outer platform section 118 for abutting the aircraft fuselage, the resilient bumpers 120 being provided with sensing means for sensing contact between the bumpers 120 and the fuselage of the aircraft 200.

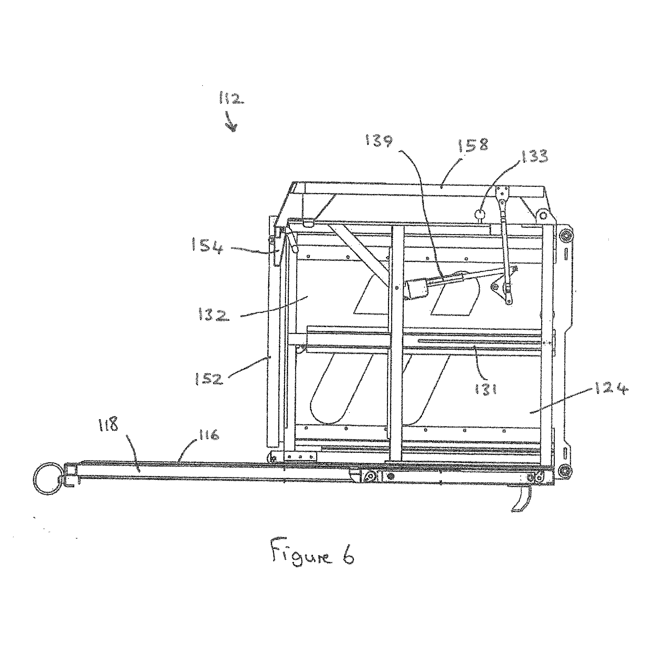

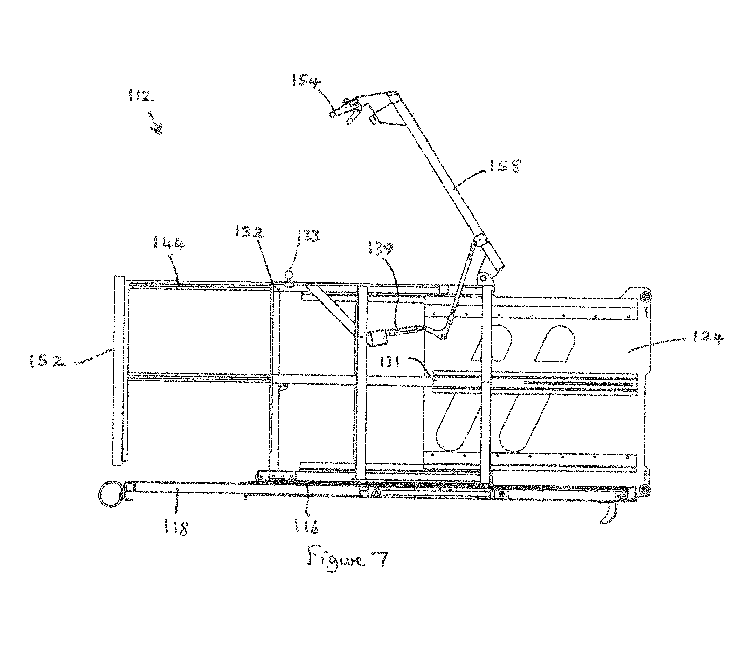

Side barriers 122,124 are provided on opposite sides of the platform 112. In the embodiment shown in Figures 4 to 9, the side barriers 122,124 may include fixed outer panels 126,128 mounted either side of the first platform section 116 adjacent an inner end thereof and extendable outer panels 130,132, slidably supported on the outer panels 126,128 between retracted positions, as shown in Figure 6, and extended positions, as shown in Figure 7, via suitable telescopic guides channels 131.

The inner panels 130,132 may be extended or retracted with respect to the outer panels 126,128 manually via suitable operating handles or via suitable actuators, such as hydraulic or pneumatic rams.

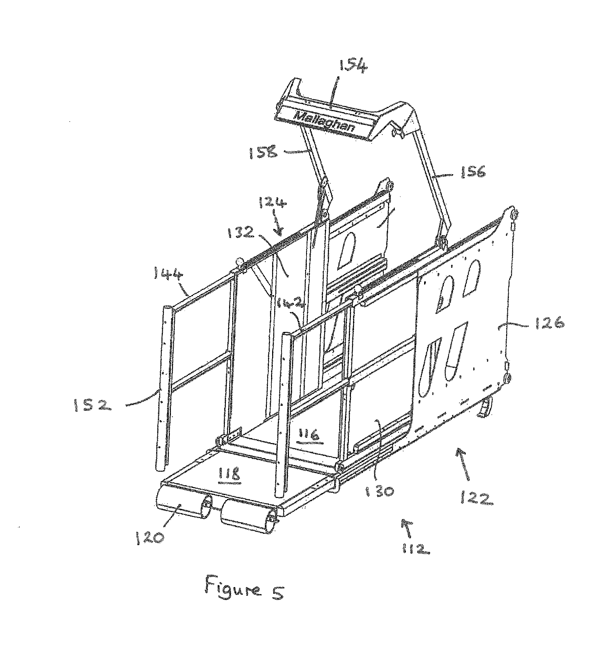

As with the first embodiment, pairs of outer side rails 142,144 may be telescopically extendable from each side barrier 122,124, said outer side rails 142,144 being extendable from the inner panels 130,132 of the side barriers 122,124 to lie on either side of the outer platform section 118 when the outer platform section 118 is in its extended position, as shown in Figures 5,7,8 and 9. Resilient bumpers 150,152 may be provided on an outer edge of respective upright member 146,148 mounted on the outer ends of each pair of outer side rails 142,144. The resilient bumpers 150,152 may also be provided with sensors to sense when the resilient bumpers 150,152 make contact with the fuselage of an aircraft 200. Handles 133 may be provided for extending the outer side rails 142,144. The outer side rails may be telescopically received within the guide channels 131 of the inner and outer panels of the side barrier 122,124 in nested fashion, further minimising the width of the side barriers 122,124.

A locking means, such as a magnetic lock, may be provided for locking the position of the inner panels 130,132 or each side barrier 122,124 with respect to the outer panels 124,126.

As with the first embodiment, a safety barrier 154 is provided at an outer end of parallel mounting arms 156,158 to extend transverse to the loading platform 112, the safety barrier 154 provided at a distal end of a pair of mounting arm 156,158 respectively pivotally mounted to the rear end of each inner panel 130,132 of a respective side barrier 122,124 such that the barrier 154 is moveable between an operative or lowered position, shown in Figures 4, 6 and 8, wherein the safety barrier 154 extends between the side barriers 122,124 to prevent an operator from moving beyond a leading edge of the first platform section 116, and a raised position, shown in Figures 5, 7 and 9, wherein an operator may pass under the barrier 154 to move onto the outer platform section 118.

Electrical, hydraulic or pneumatic actuators 139 (see Figures 6 and 7) may be provided for moving the barrier 154 between its lowered and raised positions.

By telescopically mounting the inner panels 130,132 on the outer panels 126,128 of the side barriers 122,124 and by mounting the mounting arms 156,158 of the safety barrier 154 on top of the side barriers 122,124 the overall width of the side barriers 122,124 is reduced.

As with the first embodiment, an electronic interlock system may be provided for preventing the barrier 154 from being raised from its lowered position unless sensors, for example sensors associated with the bumpers 120, detect that the platform is in position in abutment with the fuselage of an aircraft 200.

A similar interlock system, for example using magnetic locks, may be provided for preventing movement of the inner panels 130,132 of each side barrier 122,124 with respect to the outer panels 126,128 thereof unless the safety barrier 152 is in its lowered position.

The invention is not limited to the embodiment(s) described herein but can be amended or modified without departing from the scope of the present invention as defined by the appended claims.

## Claims

1. A loading platform (12,112) for a service vehicle for servicing an aircraft, said loading platform (12,112) comprising a cantilevered platform arranged to define a bridge between a container body of the service vehicle and a service opening of an aircraft, a pair of side barriers (22,24;122,124) being provided on either side of said cantilevered platform, and a safety barrier (54;154) being provided to extend transversely between the side barriers adjacent an outer end of said cantilevered platform when in an operative configuration, said safety barrier (54;154) being mounted at an outer end of a pair of mounting arms (56,58;156,158), each mounting arm being pivotally mounted on a respective side barrier such that the safety barrier (54;154) can be swung between said operative configuration, wherein the safety barrier extends transversely between said side barriers to restrain an operator from moving beyond an outer end of said cantilevered platform, and a raised configuration, wherein said safety barrier is positioned above said cantilevered platform such that said operator may pass beneath the safety barrier.

2. A loading platform as claimed in claim 1, wherein locking means are provided for locking the safety barrier (54;154) in its operative configuration.

3. A loading platform as claimed in claim 2, wherein said locking means is operatively connected to control means, said control means preventing release of said locking means unless said control means determines that the operating conditions of the loading platform are appropriate to permit release of the locking means and movement of the safety barrier to its raised configuration.

4. A loading platform as claimed in claim 3, wherein said control means includes sensing means comprising one or more proximity or contact sensors for detecting the proximity of the loading platform to an aircraft, said control means allowing release of said locking means when the sensing means indicates that the loading platform is in an appropriate position with respect to an aircraft to permit movement of the safety barrier to its raised configuration.

5. A loading platform as claimed in any preceding claim, wherein said side barriers (22,24;122,124) each comprise a first section (26,28;126;128), mounted on said cantilevered platform adjacent an inner end thereof, and a second section (30,32'130,132), slidably mounted with respect to the respective first section to be moveable between a retracted position, and an extended position, wherein the mounting arms (56,58;156,158) of said safety barrier (54;154) are pivotally mounted on respective second sections of the side barriers such that the safety barrier moves with the second sections of the side barriers between their retracted and extended positions.

6. A loading platform as claimed in claim 5, wherein each side barrier (22,24;122,124) includes a further section (42,44;142,144) telescopically extendable from the respective second section thereof.

7. A loading platform as claimed in claim 6, wherein resilient bumpers ((50;150) are provided on a leading edge of the further section (42,44;142,144) of each side barrier for abutting the fuselage of an aircraft.

8. A loading platform as claimed in any preceding claim, wherein said cantilevered platform comprising a first portion (16;116) mounted on said container body of the vehicle and a further section (18;118) telescopically extendable from said first section.

9. A loading platform as claimed in claim 8, wherein said side barriers (22,24;122,124) are mounted on said first portion (16;116) of the platform.

10. A loading platform as claimed in claim 8 or claim 9, wherein at least one resilient bumper (20;120) is provided on a leading edge of said further section (18;118) of the platform for abutting the fuselage of an aircraft when the further section (18;118) is extended with respect to the first section.

11. A loading platform as claimed in any preceding claim, wherein said mounting arms (56,58;156,158) are arranged to extend substantially horizontally when the safety barrier is in its operative configuration and to extend substantially vertically when the safety barrier is in its raised configuration.

12. A loading platform as claimed in any preceding claim, wherein biasing means are provided for biasing said safety barrier towards its raised configuration.

13. A loading platform as claimed in claim 12, wherein said biasing means comprise one or more gas struts or springs acting between one or both of the mounting arms of the safety barrier and one or both of the side barriers.

14. A loading platform as claimed in any of claims 1 to 11, wherein one or more actuators are provided for moving said safety barrier between its operative and raised configurations.

15. An aircraft service vehicle comprising a wheeled chassis having an operators cab at a forward end thereof, a container body being mounted on the chassis behind the operators cab via a lifting means enabling the container body to be elevated with respect to the chassis to allow the container body to be aligned with a service entrance of an aircraft, a loading platform (12;112) in accordance with any of claims 1 to 14 being provided at a forward end and/or a rear end of the container body, whereby persons, equipment and supplies can be transferred between the body and the service entrance of the aircraft.
